Europäisches Patentamt

European Patent Office

Office européen des brevets

(19)

(11) Publication number: **0 021 537**
**B1**

(12) EUROPEAN PATENT SPECIFICATION

(45) Date of publication of patent specification: 20.04.83

(51) Int. Cl.³: **C 08 K 3/22**

(21) Application number: **80200591.8**

(22) Date of filing: 21.06.80

(54) Thermoplastic moulding compound.

(30) Priority: 27.06.79 NL 7904991
17.10.79 NL 7907650·

(43) Date of publication of application:
07.01.81 Bulletin 81/1

(45) Publication of the grant of the patent:
20.04.83 Bulletin 83/16

(84) Designated Contracting States:
AT BE CH DE FR GB IT LI LU NL SE

(56) References cited:
CA - A - 918 330
JP - A - 76 030 850

(73) Proprietor: STAMICARBON B.V.
Postbus 10
NL-6160 MC Geleen (NL)

(72) Inventor: Vroomans, Hubertus Johannes
Spaanse Singel 18
NL-6191 GK Beek (L.) (NL)

(74) Representative: Hatzmann, Marinus Jan et al,
OCTROOIBUREAU DSM P,O.Box 9
NL-6160 MA Geleen (NL)

The file contains technical information submitted after the application was filed and not included in this specification

Courier Press, Leamington Spa, England.

# 0 021 537

## Thermoplastic moulding composition

The invention relates to a thermoplastic moulding composition of reduced combustibility on the basis of one or more vinylchloride polymers and a graft copolymer of a vinyl aromatic compound and a nitrile on a rubber-like polymer.

Mixtures of vinylchloride polymers, such as PVC and graft copolymers of a vinylaromatic compound and a nitrile on a rubber, such as ABS, sometimes with an additional quantity of a copolymer of a vinylaromatic compound and a nitrile, are known from, inter alia, the British patent specification No. 841.889.

Objects made from such mixtures have an exceptionally high impact resistance and rigidity compared with the starting materials (ABS and PVC), while these mixtures as such already have a certain degree of fire resistance.

To meet the stringent fire resistance specifications for certain plastic applications, it is necessary to add an extra fireproofing agent in many cases. The best known agent is antimony trioxide. However, the drawback of this is that the proportionately large quantities of fireproofing agent which are required have a negative effect on the impact resistance of the product.

The object of the invention is to provide a thermoplastic moulding composition of reduced combustibility on the basis of a rubber reinforced styrene polymer and PVC with minimum quantities of fireproofing agent, the mechanical properties of which composition are not, or hardly, affected by the addition of the fireproofing agent.

According to the invention, such a composition is characterized by:

A   20—80 parts by weight of vinylchloride polymer

B   80—20 parts by weight of a mixture of 30—100 % by wt. of graft copolymer obtained by polymerization of a monomer mixture of 0—75 % by wt. of acrylonitrile and/or methacrylonitrile, and 100—25 % by wt. of styrene and/or $\alpha$-methyl styrene in the presence of a rubber-like polymer, the weight ratio between the monomer mixture and the rubber-like polymer being between 1:10 and 10:1, and 0—70 % by wt. of a polymer obtained by polymerization of 0—75 % by wt. of acrylonitrile and/or methacrylonitrile, and 100—25 % by wt. of styrene and/or $\alpha$-methyl styrene, and

C   0.05—5   parts by wt. relative to 100 parts by wt. (A+B) of a zinc-titanium(IV)oxide or a mixture of zinc-oxide and titanium(IV)oxide.

The component C preferably is zinc-titanium(IV)oxide. This is a zinc-titaniumoxide compound which mostly contains some residual free zinc oxide. The compound is normally prepared by reacting two parts of zinc oxide with one part of titanium oxide. Although addition of zinc-titanium(IV)oxide, thus prepared, as fireproofing agent to ABS/PVC mixtures gives products with good fire resistance properties, problems may arise in processing, especially at higher temperatures, with unsatisfactory stability of the end product.

Preferably therefore, a zinc-titanium(IV)oxide is used with a molar zinc-titanium ratio between 0.5 and 2.5, more in particular a zinc-titanium oxide is used which contains a maximum of 5 % by wt. of free zinc oxide.

More in particular a zinc-titanate (=zinc-titanium(IV)oxide) is used that consists to a large extent, preferably to more than 50 wt. % and most preferably to more than 75 wt. %, of zinc titanate possessing the spinel structure.

The spinel structure has a cubic lattice. Various modifications are known, such as normal and inverse spinels and spinels with vacant lattice places. As employed herein the term spinel structure includes both the spinel structure itself and the usual modifications thereof.

Zinc titanate can be readily prepared by a method known *per se* by heating intimately mixed zinc oxide and titanium dioxide. Various zinc titanates are known, with various zinc:titanium ratios. Which zinc titanate is substantially formed is to a significant extent dependent on the molecular ratio of zinc and titanium in the starting mixture and may additionally also depend on the temperature at which it is heated. Besides one or more zinc titanates, the reaction product may also still contain unconverted zinc oxide or titanium dioxide or, in the case of incomplete conversion, both oxides.

Examples of zinc titanates with a spinel structure are $Zn_2TiO_4$ and $Zn_2Ti_3O_8$. In an application according to the invention, preference is given to $Zn_2Ti_3O_8$ due to the favourable effect thereof on the thermal stability of the vinyl chloride polymer compositions to be formed. And for this reason zinc titanate is preferably used that consists to more than 50 wt. % and most preferably to more than 75 wt. % of $Zn_2Ti_3O_8$.

Mention is made of the fact that the crystal structure of the zinc titanates specified above is known from Structure Reports Vol. 26, pages 376 and 377 (1961), NV, Oosthoek's Uitgeversmij, Utrecht, Netherlands.

The quantity of component C may be very minor. The actual quantity is however dependent on the exact composition of the moulding composition and can be assessed by a few simple tests by one

2

trained in the art. In a preferred embodiment 0.1—3.5 parts by wt. relative to 100 parts by wt. (A+B) are used, more specifically 0.2—2.0 parts by wt.

Optionally, an iron compound or antimony compound, more specifically an oxide of these metals, may also be added to the flame retarder.

This iron compound may be added in the form of a compound with zinc titanium(IV)oxide such as (zinc-iron-titanium) oxide, or in the form of a ferric-ferrocyanide, ferrous ferricyanide or ferrocene.

It is particularly surprising that the moulding compositions according to the invention, in which very minor quantities of flame retardant are incorporated compared with the flame retardants that have up to now usually been applied, have such excellent flame-extinguishing properties. It has been found that the oxygen index of the ABS/PVC mixtures is raised from approx. 22 to 34 and higher by addition of component C (as flame retardant). In the test as per UL 94, V—0 can be achieved at 1.6 mm.

The vinyl chloride polymer preferably employed is polyvinyl chloride. For certain applications it may be advantageous to employ copolymers of vinyl chloride containing up to 30 mole % of one or more monomers copolymerizable with vinyl chloride. Comonomers copolymerisable in vinyl chloride copolymers may be alkenes with 2 to 12 carbon atoms, such as ethylene, propylene, butylene, isobutylene, as well as dienes such as butadiene or isoprene, for example. Vinyl chloride may also be copolymerized with vinyl esters and allyl esters, such as vinyl acetate, vinyl chloroacetate, vinyl propionate, vinyl butyrate, allyl acetate, or with aromatic vinyl compounds, e.g. styrene, α-methyl styrene, chlorostyrene, vinyl toluene or with other monomers copolymerizable with vinyl chloride, such as vinylidene chloride, maleic acid esters. Also, vinyl chloride may be graft polymerized onto a polymer base such as ethylene, propylene co- or terpolymers, ethylene-vinyl-acetate copolymers.

In view of the chlorine content of the eventual moulding composition, preference will be given to a minimum of 70 % wt. vinyl chloride being present in the copolymers in order to obtain the required burning characteristics.

The rubber-like polymer employed as graft base for the styrene and optionally the nitrile is preferably a butadiene rubber such as polybutadiene, SBR and/or BAN, but other rubbers such as acrylate rubber or EPDM rubber may also be employed. Any rubber to which said monomers can be grafted is in principle suitable.

Styrene and acrylonitrile are frequently employed as graft monomers. To obtain a grade with superior heat resistance, α-methyl styrene may also be employed instead of styrene.

In addition the composition may also contain the usual additives, such as stabilizers, lubricants and pigments.

More in particular, a copolymer of ethyl acrylate and methyl methacrylate can be employed as lubricant, without the burning characteristics being significantly affected. This is very surprising, because these compounds generally have an extremely adverse effect on the final product.

The invention is now elucidated with reference to examples.


Examples I—V and Comparative Example A

From a mixture of 30 parts of ABS and 70 parts of PVC and containing the usual lubricants and stabilizers, test bars were made with different percentages of zinc-titanium(IV)oxide, which contained about 3 wt. % of free zinc oxide. The molar zinc-titanium ratio of this zinc-titanium(IV)oxide was 1.1. The crystal structure of the zinc-titanate was a spinel structure.

The table shows the results of the oxygen index and the fire characteristics according to UL-94, using bars of thicknesses of 3.2 and 1.6 mm.

TABLE 1

| Example | Zinc-titanium (IV) oxide, % by wt. | LOI* | UL-94** 3.2 mm | 1.6 mm |
|---------|-----------------------------------|------|-----------------|--------|
| I | 0.4 | 31 | V—0 | V—0 |
| II | 0.6 | 32 | V—0 | V—0 |
| III | 0.8 | 33 | V—0 | V—0 |
| IV | 1.0 | 33 | V—0 | V—0 |
| V | 1.2 | 33 | V—0 | V—0 |
| A | 0 | 26 | V—1 | V—1 |

\* Oxygen index according to ASTM-D2863.
\*\* Vertical fire test according to Underwriters Laboratories (UL-94).


Examples VI through XI

From a mixture of 70 parts of PVC, 30 parts of ABS and 2 parts of lubricant(ethylacrylate-methylmethacrylate copolymer), test bars were made with different weight percentages of zinc-titanium)IV)oxide (relative to the total mixture), and which contained about 3 % by weight of free zinc oxide. The zinc titanate had a spinel crystal structure.

Analogously to the Examples I—V, the oxygen index and the combustibility of these test bars were determined.

## TABLE 2

| Example | Zinc-titanium (IV) oxide | LOI* | UL-94** 3.2 mm | 1.6 mm |
|---|---|---|---|---|
| VI | 0.66 | 29 | V—0 | V—0 |
| VII | 1.33 | 29 | V—0 | V—0 |
| VIII | 1.66 | 29.5 | V—0 | V—0 |
| IX | 2.00 | 30 | V—0 | V—0 |
| X | 2.66 | 31 | V—0 | V—0 |
| XI | 3.33 | 31 | V—0 | V—0 |

* Oxygen index according to ASTM-D2863.
** Vertical fire test according to Underwriters Laboratories (UL-94).

Examples XII through XVII, and Comparative Example B

From a mixture of 50 parts of PVC and 50 parts of ABS and 2 parts of lubricant (ethylacrylate-methylmethacrylate copolymer) test bars were made with different weight percentages of zinc-titanium(IV)oxide (relative to the total mixture), and which contained about 3 % by weight of free zinc oxide. Analogously to the Examples I—XI, the oxygen index of these test bars were determined. The crystal structure of the zinc-titanium(IV)oxide was spinel.

## TABLE 3

| Example | Zinc-titanium (IV) oxide % by wt. | LOI* |
|---|---|---|
| XII | 0.66 | 25 |
| XIII | 1.33 | 25.5 |
| XIV | 1.66 | 26 |
| XV | 2.00 | 25.5 |
| XVI | 2.66 | 25.5 |
| XVII | 3.33 | 27 |
| B | 0 | 22.5 |

* Oxygen index according to ASTM-D2863.

Examples XVIII through XXII

From a mixture of 50 parts of ABS and 50 parts of PVC, test bars were made using zinc-titanium(IV)oxide containing 12 % by weight of free zinc oxide and having a molar zinc-titanium ratio of 1.3. The zinc-titanium(IV)oxide had a spinel structure.

## TABLE 4

| Example | Zinc-titanium (IV) oxide | LOI* | UL-94** 3.2 mm | 1.6 mm |
|---|---|---|---|---|
| XVIII | 0.2 | 25 | V—1 | 1) |
| XIX | 0.3 | 26 | V—1 | 1) |
| XX | 0.4 | 26 | V—1 | V—1 |
| XXI | 0.5 | 26.5 | V—1 | V—1 |
| XXII | 0.6 | 26.5 | V—0 | V—1 |

* Oxygen index according to ASTM-D2863.
** Vertical fire test according to Underwriters Laboratories (UL-94).
1) Means that the test bar is fully combusted.

Examples XXIII and XXIV

From a mixture of 50 parts of ABS and 50 parts of PVC, test bars were made containing (zinc-iron-titanium(IV)) oxide and bars containing zinc-titanium(IV)oxide with ferric oxide. The results are shown in Table 5.

4

# 0 021 537

## TABLE 5

| Example | Fire-proofing agent | % | LOI* | UL-94** 3.2 mm | 1.6 mm |
|---|---|---|---|---|---|
| XXIII | (zinc-iron-titanium) oxide | 0.5 | 34 | V—0 | V—1 |
| XXIV | zinc-titanium(IV)oxide | 0.6 | 33 | V—0 | V—0 |
| | Ferric oxide | 0.2 | | | |

\* Oxygen index according to ASTM-D2863.

\*\* Vertical fire test according to Underwriters Laboratories (UL-94).

Example XXV

Test bars were made of a mixture of 50 parts ABS and 50 parts PVC containing 0.4 % of a zinc-titanate having an ilmenite structure. The oxygen index was 25, and the ratings according to UL 94 were V—1 for 3.2 mm, whereas the testbar of 1.6 mm was fully combusted.

Examples XXVI and XXVII, and Comparative Example C

Of a mixture of 70 parts PVC and 30 parts ABS some mechanical properties were determined (impact resistance, hardness, E-modulus) (Example C). Of the same mixture, containing 0.5 and 1.0 % of the zinc-titanate of Example I) Examples XXVI and XXVII) the same properties were determined.

Within the error of measurement, no differences were observed.

**Claims for the contracting states: BE—CH—DE—FR—GB—IT—LU—NL—SE**

1. Thermoplastic moulding composition of reduced combustibility on the basis of one or more vinylchloride polymers and grafted copolymer of a vinyl aromatic compound and a nitrile on a rubber-like polymer, characterized in that this moulding composition consists of:

A 20—80 parts by weight of vinylchloride polymer

B 80—20 parts by weight of a mixture of 30—100 % by wt. of grafted copolymer obtained by polymerization of a monomer mixture of 100—25 % by wt. of styrene and/or $\alpha$-methylstyrene in the presence of a 0—75 % by wt. of acrylonitrile and/or methacrylonitrile, and rubber-like polymer, the weight ratio between the monomer mixture and the rubber-like polymer being between 1:10 and 10:1, and 0—70 % by wt. of a polymer obtained by polymerization of a mixture of 0—75 % by wt. of acrylonitrile and/or methacrylonitrile, and 100—25 % by wt. of styrene and/or $\alpha$-methylstyrene, and

C 0.05—5 parts by wt. relative to 100 parts by wt. of (A+B) of zinc-titanium(IV)oxide or a mixture of zinc oxide and titanium(IV)oxide.

2. Moulding composition according to claim 1, characterized in that zinc-titanium(IV)oxide is used which contains not more than 5 % by wt. of free zinc oxide.

3. Moulding composition according to claim 2, characterized in that zinc-titanium(IV)oxide is used with a molar Zn-Ti(IV) ratio of between 0.5 and 2.5.

4. Moulding composition according to claim 1, characterized in that a zinc-titanate is used that consists for more than 50 wt. % of zinc titanate possessing the spinel structure.

5. Moulding composition according to claim 4, characterized in that the composition includes 0.1—2 parts by wt. per 100 parts by wt. (A+B) of said zinc titanate.

6. Moulding composition according to claim 4 or 5, characterized in that said zinc titanate consists to more than 75 wt. % of zinc titanate with the spinel structure.

7. Moulding composition according to any of claims 4—6, characterized in that said zinc titanate consists of $Zn_2Ti_3O_8$.

8. Moulding composition according to claim 1, characterized in that component C contains an iron compound.

9. Article wholly or partially manufactured from a moulding composition according to any of claims 1—8.

**Claims for the contracting state: AT**

1. Process for the preparation of a thermoplastic moulding composition of reduced combustibility on the basis of one or more vinylchloride polymers and grafted copolymer of a vinyl aromatic compound and a nitrile on a rubber-like polymer, characterized in that this moulding composition is prepared from

A 20—80 parts by weight of vinylchloride polymer

B 80—20 parts by weight of a mixture of 30—100 % by wt. of grafted copolymer obtained by polymerization of a monomer mixture of 0—75 % by wt. of acrylonitrile and/or

5

**0 021 537**

methacrylonitrile, and 100—25 % by wt. of styrene and/or $\alpha$-methylstyrene in the presence of a rubber-like polymer, the weight ratio between the monomer mixture and the rubber-like polymer being between 1:10 and 10:1, and 0.70 % by wt. of a polymer obtained by polymerization of a mixture of 0—75 % by wt. of acrylonitrile and/or methacrylonitrile, and 100—25 % by wt. of styrene and/or $\alpha$-methylstyrene, and

C   0.05—5   parts by wt. relative to 100 parts by wt. of (A+B) of zinc-titanium(IV)oxide or a mixture of zinc oxide and titanium(IV)oxide.

2. Process according to claim 1, characterized in that zinc-titanium(IV)oxide is used which contains not more than 5 % by wt. of free zinc oxide.

3. Process according to claim 2, characterized in that zinc-titanium(IV)oxide is used with a molar Zn—Ti(IV) ratio of between 0.5 and 2.5.

4. Process according to claim 1, characterized in that a zinc-titanate is used that consists for more than 50 wt. % of zinc titanate possessing the spinel structure.

5. Process according to claim 4, characterized in that the composition includes 0.1—2 parts by wt. per 100 parts by wt. (A+B) of said zinc titanate.

6. Process according to claim 4 or 5, characterized in that said zinc titanate consists to more than 75 wt. % of zinc titanate with the spinel structure.

7. Process according to any of claims 4—6, characterized in that said zinc titanate consists of $Zn_2Ti_3O_8$.

8. Process according to claim 1, characterized in that component C contains an iron compound.

9. Article wholly or partially manufactured from a moulding composition prepared according to any of claims 1—8.

**Patentansprüche für die Vertragsstaateu: BE, CH, DE, FR, GB, IT, LU, NL, SE**

1. Thermoplastische Formmasse mit verringerter Brennbarkeit auf der Basis von einem oder mehreren Vinylchloridpolymeren und einem Pfropfcopolymeren einer vinylaromatischen Verbindung und eines Nitrils auf einem kautschukartigen Polymeren, dadurch gekennzeichnet, daß diese Formmasse besteht aus:

A   20—80   Gew.-Tilen eines Vinylchloridpolymeren

B   80—20   Gew.-Teilen eines Gemisches von 30—100 Gew.-% eines Pfropfcopolymeren, erhaiten durch Polymerisation eines Monomerengemisches von 0—75 Gew.-% Acrylonitril und/oder Methacrylonitril und 100—25 Gew.-% Styrol und/oder $\alpha$-Methylstyrol in Gegenwart eines kautschukartigen Polymeren, wobei das Gewichtsverhältnis zwischen dem Monomerengemisch und dem kautschukartigen Polymeren zwischen 1:10 und 10:1 beträgt, und 0—70 Gew.-% eines Polymeren, erhalten durch Polymerisation eines Gemisches von 0—75 Gew.-% Acrylonitril und/oder Methacrylonitril und 100—25 Gew.-% Styrol und/oder $\alpha$-Methylstyrol, und

C   0,05—5   Gew.-Teilen, bezogen auf 100 Gew.-Teilen (A+B) eines Zinktitan(IV)-oxids oder eines Gemisches von Zinkoxid und Titan(IV)-oxid.

2. Formmasse nach Anspruch 1, dadurch gekennzeichnet, daß Zinktitan(IV)-oxide verwendet wird, das nicht mehr als 5 Gew.-% freies Zinkoxid enthält.

3. Formmasse nach Anspruch 2, dadurch gekennzeichnet, daß Zinktitan(IV)-oxid mit einem molaren Zn-Ti(IV)-Verhältnis zwischen 0,5 und 2,5 verwendet wird.

4. Formasse nach Anspruch 1, dadurch gekennzeichnet, daß ein Zinktitanat verwendet wird, daß zu mehr als 50 Gew.-% aus Zinktitanat mit Spinellstruktur besteht.

5. Formmasse nach Anspruch 4, dadurch gekennzeichnet, daß die Masse 0,1—2 Gew.-Teile je 100 Gew.-Teilen (A+B) des Zinktitanats enthält.

6. Formmasse nach Anspruch 4 oder 5, dadurch gekennzeichnet, daß das Zinktitanat zu mehr als 75 Gew.-% aus dem Zinktitanat mit Spinellstruktur besteht.

7. Formmasse nach einem der Ansprüche 4 bis 6, dadurch gekennzeichnet, daß das Zinktitanat aus $Zn_2Ti_3O_8$ besteht.

8. Formmasse nach Anspruch 1, dadurch gekennzeichnet, daß die Komponente C eine Eisenverbindung enthält.

9. Gegenstand, der ganz oder zum Teil aus einer Formmasse gemäß einem der Ansprüche 1 bis 8 hergestellt ist.

**Patentansprüche für den Vertragsstaat: AT**

1. Verfahren zur Herstellung einer thermoplastischen Formmasse mit verringerter Brennbarkeit auf der Basis von einem oder mehreren Vinylchloridpolymeren und einem Propfcopolymeren einer

6

vinylaromatischen Verbindung und eines Nitrils auf einem kautschukartigen Polymeren, dadurch gekennzeichnet, daß diese Formmasse hergestellt wird aus:

A  20—80 Gew.-Teilen eines Vihylchloridopolymeren

B  80—20 Gew.-Teilen eines Gemisches von 30—100 Gew.-% eines Pfropfcopolymeren, erhalten durch Polymerisation eines Monomerengemisches von 0—75 Gew.-% Acrylonitril und/oder Methacrylonitril und 100—25 Gew.-% Styrol und/oder $\alpha$-Methylstyrol in Gegenwart eines kautschukartigen Polymeren, wobei das Gewichtsverhältnis zwischen dem Monomerengemisch und dem kautschukartigen Polymeren zwischen 1:10 und 10:1 beträgt, und 0—70 Gew.-% eines Polymeren, erhalten durch Polymerisation eines Gemisches von 0—75 Gew.-% Acrylonitril und/oder Methacrylonitril und 100—25 Gew.-% Styrol und/oder $\alpha$-Methylstyrol, und

C  0,05—5 Gew.-Teilen, bezogen auf 100 Gew.-Teile (A+B) eines Zinktitan(IV)-oxids oder eines Gemisches von Zinkoxid und Titan(IV)-oxid.

2. Verfahren nach Anspruch 1, dadurch gekennzeichnet, daß Zinktitan(IV)-oxid verwendet wird, das nicht mehr als 5 Gew.-% freies Zinkoxid enthält.

3. Verfahren nach Anspruch 2, dadurch gekennzeichnet, daß Zinktitan(IV)-oxid mit einem molaren Zn—Ti(IV)-Verhältnis zwischen 0,5 und 2,5 verwendet wird.

4. Verfahren nach Anspruch 1, dadurch gekennzeichnet, daß ein Zinktitanat verwendet wird, daß zu mehr als 50 Gew.-% aus Zinktitanat mit Spinellstruktur besteht.

5. Verfahren nach Anspruch 4, dadurch gekennzeichnet, daß die Masse 0,1—2 Gew.-Teile je 100 Gew.-Tile (A+B) des Zinktitanats enthält.

6. Verfahren nach Anspruch 4 oder 5, dadurch gekennzeichnet, daß das Zinktitanat zu mehr als 75 Gew.-% aus dem Zinktitanat mit Spinellstruktur besteht.

7. Verfahren nach einem der Ansprüche 4 bis 6, dadurch gekennzeichnet, daß das Zinktitanat aus $Zn_2Ti_3O_8$ besteht.

8. Verfahren nach Anspruch 1, dadurch gekennzeichnet, daß die Komponente C eine Eisenverbindung enthält.

9. Gegenstand, der ganz oder zum Teil aus einer Formasse gemäß einem der Ansprüche 1 bis 8 hergestellt ist.


**Revendications pour les Etats contractants: BE, CH, DE, FR, GB, IT, LU, NL, SE**

1. Composition de moulage thermoplastique de combustibilité réduite, à base d'un ou plusieurs polymères de chlorure de vinyle et d'un copolymère de greffage d'un composé vinylaromatique et d'un nitrile sur un polymère caoutchouteux, caractérisée en ce que cette composition de moulage est constituée de:

A  20—80 parties en poids de polymère de chlorure de vinyle,

B  80—20 parties en poids d'un mélange de:— 30—100% en poids de copolymère de greffage obtenu par polymérisation d'un mélange monomère de 0—75 % en poids d'acrylonitrile et/ou de méthacrylonitrile et de 100—25 % en poids de styrène et/ou d'$\alpha$-méthylstyrène en présence d'un polymère caoutchouteuxu, le rapport pondéral entre le mélange monomère et le polymère caoutchouteux étant entre 1/10 et 10/1, et— 0—70 % en poids d'un polymère obtenu par polymérisation d'un mélange de 0—75 % en poids d'acrylonitrile et/ou de méthacrylonitrile, et 100—25% en poids de styrène et/ou d'$\alpha$-méthylstyrène, et

C  0,05—5 parties en poids pour 100 parties en poids de (A+B) d'oxyde de zinc-titane(IV) ou d'un mélange d'oxyde de zinc et d'oxyde de titane(IV).

2. Composition de moulage selon la revendication 1, caractérisée en ce que l'on utilise de l'oxyde de zinc-titane(IV) qui ne contient pas plus d 5 % en poids d'oxyde de zinc libre.

3. Composition de moulage selon la revendication 2, caractérisée en ce qu'on utilise de l'oxyde de zinc-titane(IV) avec un rapport molaire d Zn/Ti(IV) entre 0,5 et 2,5.

4. Composition de moulage selon la revendication 1, caractérisée en ce qu'on utilise un titanate de zinc qui est constitué de plus de 50% en poids de titanate de zinc possédant la structure de spinelle.

5. Composition de moulage selon la revendication 4, caractérisée en ce que la composition comprend 0,1—2 parties en poids pour 100 parties en poids de (A+B) dudit titanate de zinc.

6. Composition de moulage selon la revendication 4 ou 5, caractérisée en ce que ledit titanate de zinc est constitué de plus de 75 % en poids de titanate de zinc ayant la structure de spinelle.

7. Composition de moulage selon l'une quelconque des revendications 4 à 6, caractérisée en ce que ledit titanate de zinc est constitué de $Zn_2Ti_3O_8$.

**0 021 537**

8. Composition de moulage selon la revendication 1, caractérisée en ce que le composant C contient un composé de fer.

9. Article entièrement ou partiellement préparé à partir d'une composition de moulage selon l'une quelconque des revendications 1 à 8.

**Revendications pour l'Etat contractant: AT**

1. Procédé pour la préparation d'une composition de moulage thermoplastique de combustibilité réduite à base d'un ou plusieurs polymères de chlorure de vinyle et d'un polymère de greffage d'un composé vinylaromatique et d'un nitrile sur un polymère caoutchouteux, caractérisé en ce que cette composition de moulage est préparée à partir de:

A   20—80   parties en poids d'un polymère de chlorure de vinyle,

B   80—20   parties en poids d'un mélange de 30—100 % en poids de copolymère de greffage obtenu par polymérisation d'un mélange monomère de 0—75 % en poids d'acrylonitrile et/ou de méthacrylonitrile et de 100—25 % en poids de styrène et/ou d'$\alpha$-méthylstyrène en présence d'un polymère caoutchouteux, le rapport pondéral entre le mélange polymère et le polymère caoutchouteux étant entre 1/10 et 10/1, et 0—70 % en poids d'un polymère obtenu par polymérisation d'un mélange de 0—75% en poids d'acrylonitrile et/ou de méthacrylonitrile et 100—25 % en poids de styrène et/ou d'$\alpha$-méthylstyrène et

C   0,05—5   parties en poids pour 100 parties en poids de (A+B) d'oxyde de zinc-titane(IV) ou d'un mélange d'oxyde de zinc et d'oxyde de titane(IV).

2. Procédé selon la revendication 1, caractérisé en ce que l'on utilise de l'oxyde de zinc-titane(IV) qui ne contient pas plus de 5 % en poids d'oxyde de zinc libre.

3. Procédé selon la revendication 2, caractérisé en ce qu'on utilise de l'oxyde de zinc-titane(IV) avec un rapport molaire Zn/Ti(IV) entre 0,5 et 2,5.

4. Procédé selon la revendication 1, caractérisé en ce qu'on utilise un titanate de zinc qui est constitué de plus de 50 % en poids de titanate de zinc possédant la structure de spinelle.

5. Procédé selon la revendication 4, caractérisé en ce que la composition comprend 0,1—2 parties en poids pour 100 parties en poids de (A+B) dudit titanate de zinc.

6. Procédé selon la revendication 4 ou 5, caractérisé en ce que ledit titanate de zinc est constitué de plus de 75 % en poids de titanate de zinc ayant la structure de spinelle.

7. Procédé selon l'une quelconque des revendications 4 à 6, caractérisé en ce que ledit titanate de zinc est constitué de $Zn_2Ti_3O_8$.

8. Procédé selon la revendication 1, caractérisé en ce que le composant C contient un composé de fer.

9. Article entièrement ou partiellement manufacturé à partir d'une composition de moulage préparée selon l'une quelconque des revendications 1 à 8.

8